# EUROPÄISCHE PATENTSCHRIFT

(11) **EP 1 350 574 B1**
(45) Veröffentlichungstag und Bekanntmachung des Hinweises auf die Patenterteilung: **06.04.2011**
(21) Anmeldenummer: 02022852.4
(22) Anmeldetag: 14.10.2002
(51) Int. Cl.: B05C 3/09, B05B 13/02, B05C 3/08

(54) **Vorrichtung zur Oberflächenbeschichtung von Kleinteilen**
Surface coating apparatus for small pieces
Appareil pour le revêtement de surface de petites pièces

(30) Priorität: 07.03.2002 DE 10209908
(43) Veröffentlichungstag der Anmeldung: 08.10.2003
(73) Patentinhaber: Ernst Reinhardt GmbH, 78048 Villingen-Schwenningen (DE)
(72) Erfinder: Reinhardt, Eugen, 78048 Villingen-Schwenningen (DE)
(74) Vertreter: Patentanwälte Westphal, Mussgnug & Partner

(56) Entgegenhaltungen:
- EP-A- 0 578 064
- DE-A1- 2 152 243
- DE-B- 1 162 662
- DE-B- 1 171 816
- DE-C1- 19 613 927
- US-A- 3 637 062
- US-A- 4 722 295
- US-A- 6 090 262

## Beschreibung

Die Erfindung betrifft eine Anlage zur Oberflächenbeschichtung von Kleinteilen der im Oberbegriff des Patentanspruchs 1 angegebenen Art.

Die Beschichtung, insbesondere das Lackieren, von Kleinteilen mit Vertiefungen wie Bohrungen, Sacklöchern, Einziehungen und Hinterschneidungen, ist vor allem in der Massenfertigung schwierig.

Wie z.B. in DE 31 21 397 C1, DE 34 20 859 C2 und DE 36 36 162 C2 beschrieben, kann die Beschichtung solcher Kleinteile im Haufwerk mittels einer umlaufenden Trommel erfolgen, welche entweder zur Aufnahme des Beschichtungsmateriales in ein Tauchbad eingetaucht oder in welche das Beschichtungsmittel eingesprüht wird.

Um eine gleichmäßige Beschichtung aller Oberflächen der Kleinteile zu erreichen, wird die langsam drehende Trommel der Anordnung nach DE 34 20 859 zunächst in eine Schräglage gebracht, in welcher Beschichtungsmittel eingesprüht wird. Hierauf wird die Trommel in eine aufrechte Stellung gebracht und anschließend nach Art einer Zentrifuge in schnelle Rotation versetzt.

Die Mechanik für Antrieb und Steuerung der Trommel ist vergleichsweise aufwendig und damit kostspielig und reparaturanfällig.

Ein entscheidender Nachteil ist jedoch, dass die Durchsatzmenge bzw. die Durchlaufzeit vom langsamsten Bearbeitungsvorgang abhängt.

Der vorliegenden Erfindung liegt darum die Aufgabe zugrunde, eine Anlage dieser Art zu schaffen, welche bei einfachem Aufbau eine größere Durchsatzmenge bzw. kürzere Durchlaufzeiten ermöglicht.

Die Erfindung geht hierbei von einer aus US 3,637,062 bekannten Anlage zum Galvanisieren von Kleinteilen aus, welche mittels umlaufender, perforierter Trommeln in verschiedene Bearbeitungsstationen transportiert werden, wobei in diesen Stationen Bearbeitungstanks, u. a. auch ein Tauchbad, vorgesehen sind. Die Trommeln sind mit ihren einseitig abstehenden Achsen mit einer umlaufenden Förderkette verbunden. Zum Ausheben der Trommeln aus den Tanks bzw. Einbringen der Trommeln in die Tanks werden diese mit Hilfe von Steuerkurven, die der Führung der Trommelachsen dienen, in Schräglage gebracht. An den Achsenden der Trommel sind Ritzel vorgesehen, welche mit einer in Förderrichtung verlaufenden Zahnstange in Eingriff gebracht werden können, so dass beim Vorschub der Trommeln diese in Drehbewegung versetzbar sind.

Auch diese Anlagen hat die zuvor beschriebenen Nachteile.

Zum einen sind Antrieb und Steuerung der Trommel gleichfalls aufwändig und reparaturanfällig. Für größere oder schwerere Kleinteilmengen ist eine derartige Anordnung wenig geeignet. Zum andern bestimmt auch bei dieser Anordnung der langsamste Bearbeitungsvorgang die Durchlaufzeit. Diese Nachteile sind bei der mit der Erfindung vorgeschlagenen und mit Anspruch 1 gekennzeichneten Anlage vermieden. Zum Transport der Trommeln sind gemäß der Erfindung als Längsförderer beidseitig der Anlage angeordnete Hubbalken vorgesehen, welche axial verschiebbar in Führungsschienen gelagert sind und im Abstand der Stationen nach oben offene Achsaufnahmen aufweisen. In diese lassen sich die Trommeln mit ihren seitlich überstehenden Achsenden einhängen. Die Vorschubbewegung der Trommeln erfolgt durch Axialverschiebung der Hubbalken, das Einbringen bzw. Aushebeln der Trommeln aus den Bearbeitungsstationen, insbesondere dem Tauchbad, durch Absenken bzw. Anheben der Hubbalken. Jeweils wenigstens ein Achsende der Trommel weist ein Antriebsritzel auf, das mit dem in jeder Stationen vorgesehenen Drehantrieb in Drehverbindung bringbar ist. Damit ist ein individueller Drehantrieb der Trommeln in den jeweiligen Stationen möglich, so dass die Durchlaufzeit anders als bei den bekannten Vorrichtungen nicht vom langsamsten Bearbeitungsvorgang abhängt.

Mittels einer derartigen Anlage werden somit die einzelnen Bearbeitungsvorgänge jeweils in einer von mehreren Bearbeitungsstationen durchgeführt.

Nach der Erfindung weist die erste Station ein Tauchbad auf, in welches die Trommel mittels der Hubvorrichtung bei langsamer Drehung abgesenkt wird. Die in der Trommel befindlichen Kleinteile nehmen hierbei das Beschichtungsmittel auf.

In einer zweiten folgenden Station, die mit einer Abtropfwanne ausgestattet ist, wird überschüssiges Material bei langsamer Umdrehung der Trommel abgetropft.

Die dritte Station ist nach Art einer Zentrifuge mit schnell laufendem Antrieb ausgebildet. Dieser Bearbeitungsschritt dient vor allem der Vergleichmässigung der Oberflächenbeschichtung.

In einer vierten Station schließlich wird die Trommel geöffnet, so dass die in der Trommel befindlichen Kleinteile mittels einer unter dieser angeordneten Palette aufgenommen werden können.

Zum Rücktransport und Neubefüllen der entleerten Trommeln sind gemäß Anspruch 2 zwischen letzter Station und erster Station ein Förderer sowie eine Fülleinrichtung vorgesehen.

Vorteilhafterweise kann gemäß Anspruch 3 im Weg des Rück-transportförderers eine Reinigungseinrichtung zur selbsttätigen Reinigung der entleerten und geöffneten Trommeln vorgesehen sein. Die Reinigung kann gemäß Anspruch 4 entweder mit Hochdruckwasserstrahl oder gemäß Anspruch 5 mit Ultraschall erfolgen.

Um auch das Beladen der rückgeführten leeren Trommeln so rationell wie möglich durchzuführen, weist die Fülleinrichtung gemäß Anspruch 6 einen im Vorschubtakt umlaufenden Rundtisch auf, mit welchem der Beladevorgang in einzelnen Arbeitsschritten erfolgen kann.

Ein besonders günstiges Handling ist mit gemäß Anspruch 7 ausgebildeten Trommeln möglich. Diese bestehen aus zwei spiegelsymmetrischen Halbschalen, die auf einer Achse axial verschiebbar aber drehfest angeordnet sind und mittels eines Schubmechanismus gegeneinander und voneinander verschiebbar sind.

Zum Beladen derartiger Trommeln sind diese so zu positionieren, dass ihre Achse senkrecht steht, worauf die Beschickung der geöffneten Halbschalen über den entstandenen Zwischenraum mittels einer Rutsche oder dergleichen erfolgt.

Zum Entleeren der Trommel ist diese um 90° zu drehen, also in eine Position zu bringen, in welcher die Achse horizontal verläuft. Die Entleerung der zweckmäßigerweise umlaufenden Trommel erfolgt dadurch, dass die Halbschalen axial von einander entfernt werden, so dass die in der Trommel befindlichen Kleinteile über den offenen Schlitz nach unter austreten können.

Die Trommelgestaltung gemäß Anspruch 8 gewährleistet eine in- tensive Bewegung der in die Trommel eingebrachten Kleinteile und damit eine schnelle und gleichmäßige Oberflächenbeschichtung.

Sollten Arbeitsvorgänge in einzelnen Stationen wesentlich mehr Zeit in Anspruch nehmen als in den übrigen Stationen, können nach dem Vorschlag gemäß Anspruch 9 mehrere Stationen mit gleicher Funktion in Bearbeitungsrichtung hintereinander angeordnet sein.

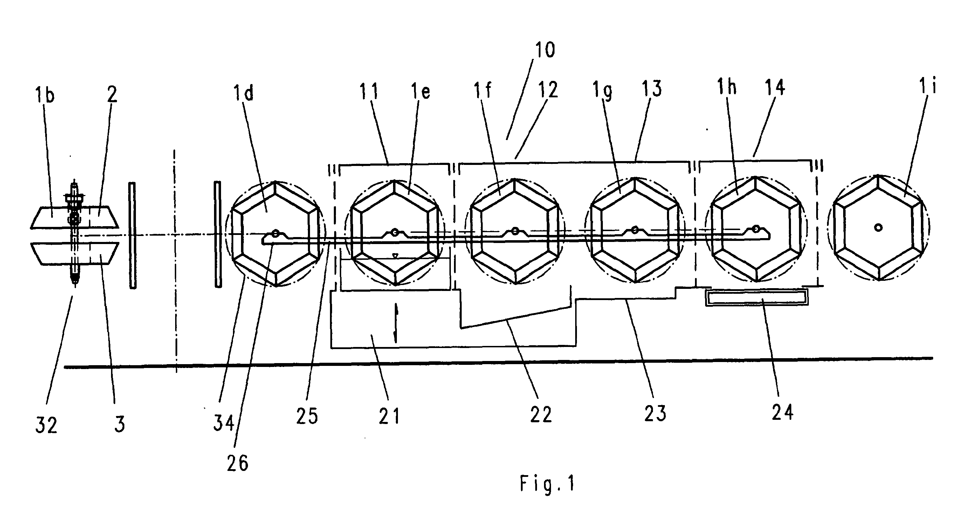

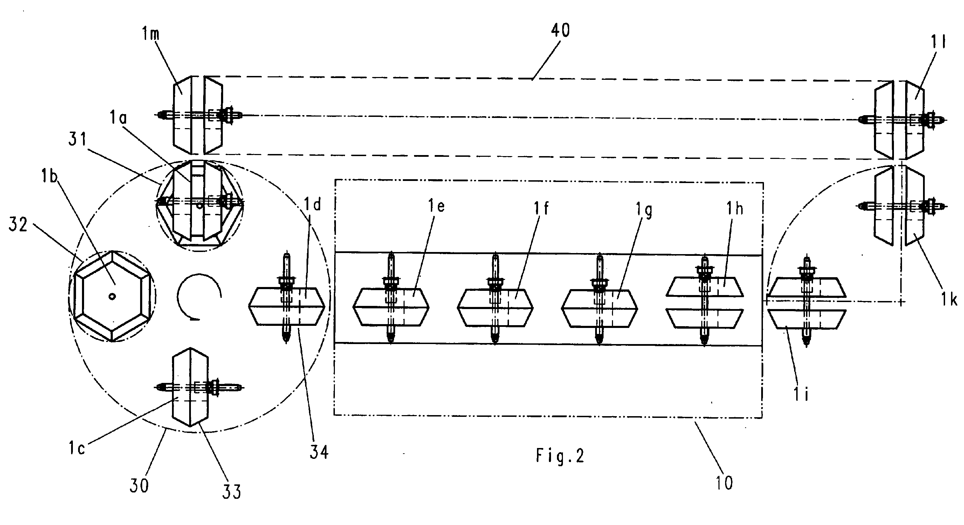

Fig. 1 und 2 veranschaulicht, arbeitet die Anlage mit einer ganzen Anzahl von Trommeln, die von Station zu Station taktweise befördert werden.

Die Trommel 1d, welche mit der anhand von Fig. 2 im Einzelnen erläuterten Fülleinrichtung zu beladen ist, wird vom Hubbalken 25 des Längsförderer aufgenommen und durch Längsverschieben des Hubbalkens 25 bis zur Tauchstation 11 transportiert. Die in der Tauchstation 11 befindliche Trommel 1e wird mit einer nicht dargestellten Hub- und Senkeinrichtung bei langsamer Drehung in das Tauchbad 21 abgesenkt.
Durch Perforationen der Trommel dringt hierbei das Beschichtungsmaterial in das Trommelinnere, wobei infolge der Trommelbewegung die Kleinteile oberflächlich beschichtet werden.

Im nächsten Arbeitstakt nimmt die Trommel die Position 1f in der Abtropfstation 12 ein. Bei langsamer Umdrehung der Trommel 1f tropft überschüssiges Beschichtungsmaterial ab und wird mittels des Abtropfblechs 22 aufgefangen.

Die nächst folgende Schleuderstation 13 ist nach Art einer Zentrifuge ausgebildet, welche die Trommel 1g in schnelle Rotation versetzt. Die auf die Kleinteile wirkenden Zentrifugalkräfte sorgen für eine Vergleichmäßigung der Oberflächenbeschichtung. Unterhalb der Trommel 1g ist ein Auffangbehälter 23 vorgesehen, mit welchem abgeschleudertes Beschichtungsmaterial aufgefangen wird.

Für den Fall, dass die Bearbeitungszeit in Abtropfstation und Schleuderstation länger als in den übrigen Stationen ist, können diese beiden Stationen auch jeweils zweifach vorgesehen sein.

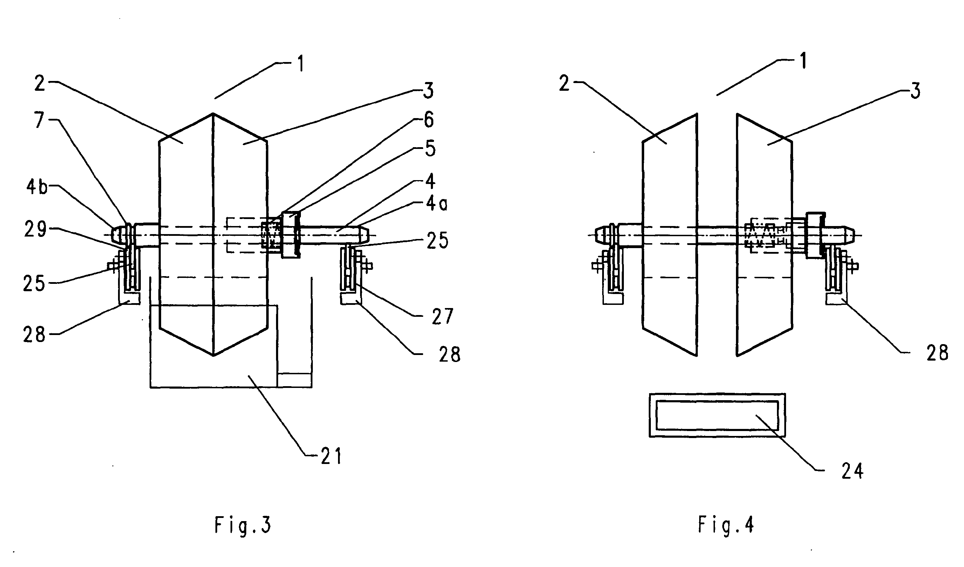

In der dritten Station 14 erfolgt die Entleerung der Trommel 1h in der anhand von Fig. 4 erläuterten Weise. Die beschichteten Kleinteilen werden mittels einer unterhalb der Trommel 1h vorgesehenen Ofenpalette 24 aufgefangen und mit dieser zu einen nicht dargestellten Brennofen gebracht.

Die nunmehr entleerten Trommeln 1i bis 1m werden über eine gestrichelt angedeutete, jedoch im Einzelnen nicht dargestellte Rückfördereinrichtung 40 zur Fülleinrichtung zurückgeführt.

Die Fülleinrichtung weist einen mit einer strichpunktierten Linie angedeuteten Rundtisch 30 auf, der im Gegenuhrzeigersinn im Bearbeitungstakt von Position 31 zu Position 34 weitergeschaltet wird.

Position 31 ist eine Einschleusstation, in welcher die noch offene Trommel 1a aus einer Position mit horizontal liegender Achse in die zum Beladen in der Füllstation 32 geeignete vertikale Position gedreht wird.

In der Füllstation 32 werden über eine nicht dargestellte Rutsche oder dergleichen die Kleinteile in die offene Trommel 1b eingebracht. Nach Befüllen werden die Trommelhalbschalen gegeneinander verfahren, sodaß die Trommel 1c in der Schließstation 33 geschlossen ist.

Nach einem weiteren Arbeitsschritt des Rundtisches um 90° gelangt die Trommel 1d in die Übergabestation 34, aus welcher sie, wie anhand von Fig. 1 bereits beschrieben, in die Anlage 10 überführt wird.

Die vergrößerten Ansichten gemäß Fig. 3 und 4 lassen Einzelheiten der Trommel 1 sowie des Trommelantriebes besser erkennen.

Die Trommel 1 besteht aus den beiden Halbschalen 2 und 3, welche gegen die Wirkung einer Rückstellfeder 6 auf der Achse 4 axial verschiebbar, jedoch mit der Achse drehfest verbunden sind.

Durch Verschieben der Trommelhalbschalen 2 und 3 aus einer Position gemäß Fig. 3 in die Position gemäß Fig. 4 wird die Trommel geöffnet, so dass die in ihrem Innern befindlichen Kleinteile nach unten austreten und mit der in Fig. 4 angedeuteten Ofenpalette 24 aufgenommen werden können. Das Öfnen und Schließen der Trommelhalbschalen erfolgt mittels eines nicht dargestellten, vorzugsweise pneumatisch oder hydraulisch betätigten Kniehebelmechanismus, der mit 5 angedeutet ist.
Im Diagonalschnitt sind die Trommelhalbschalen 2 und 3 trapezförmig ausgebildet und spiegelsymmetrisch derart zueinander angeordnet, dass die längeren Trapezseiten einander zugewandt sind. Damit ergibt sich bei geöffneter Trommel ein trichterförmiger Auslass, wie Fig. 4 zeigt. Im Querschnitt haben die Trommeln 1 die Form eines Sechseckes, welches einen intensiven Platzwechsel der Kleinteile innerhalb der umlaufenden Trommel begünstigt.

Lagerung, Transport und Antrieb der Trommeln erfolgen mittels der seitlich abstehenden Enden 4a , 4b der Achse 4, welche in des einzelnen Stationen 21 bis 24 bzw. 34 von den nach oben offenen Achsaufnahmen 26 des Hubbalkens 25 aufgenommen werden. Das Achsende 4b weist ein Antriebsritzel 7 auf, das in den Bearbeitungsstationen 21 bis 24 mit einem Antriebszahnrad 29 der im Übrigen nicht dargestellten Drehantriebs in Eingriff gebracht wird.

Die vertikal anhebbaren Hubbalken 25 sind in Längsförderern 27 angeordnet, welche in Führungsschienen 28 transversal verschiebbar sind.

Mit dieser einfachen Einrichtung werden die Trommeln in die Positionen 1b bis 1i taktweise befördert und in jeder Station 1 bis 14 derart abgesenkt, dass sie mit den jeweiligen Antrieben in Eingriff gelangen.

Verglichen mit bekannten Vorrichtungen ist die erfindungsgemäße Anlage trotz ihrer größeren Anzahl von Trommeln weniger aufwändig, da Kipp- und Schwenkvorgänge der Trommeln zum Zwecke der Beschichtung nicht notwendig sind.

Die vergleichsweise einfach gestalteten Trommeln lassen sich vollkommen verschließen. Ferner ist es möglich, den Lackraum mit den Stationen 11 bis 14 gegenüber dem Umfeld abzuschotten, wodurch die Umweltfreundlichkeit der Anlage entscheidend verbessert wird.

Zum Entleeren sind die Trommelhalbschalen in geringem Abstand zu einer Auffangpalette zu öffnen, was wegen der geringen Fallhöhe zu einer schonenden Übergabe der beschichteten Kleinteile führt.

Der entscheidende Vorteil der erfindungsgemäßen Anlage besteht in seiner außerordentlichen Leistungsfähigkeit. Bei Trommelchargen mit einem Gewicht von 100 Kilo und einer Durchlaufzeit von 60 Sekunden lassen sich Durchsatzmengen in der Größenordnung von 8 bis 10 Tonnen realisieren.

### Bezugszeichenliste

- 1a bis m: Trommeln
- 2,3: Trommelhalbschalen
- 4: Trommelachse
- 4a, b: Achsenden
- 5: Öffnungsmechanismus
- 6: Rückstellfeder
- 7: Antriebsritzel

- 10: Anlage
- 11: Tauchstation
- 12: Abtropfstation
- 13: Schleuderstation
- 14: Entleerstation

- 21: Tauchbad
- 22: Abtropfblech
- 23: Auffangbehälter
- 24: Ofenpalette
- 25: Hubbalken
- 26: Achsaufnahmen
- 27: Längsförderer
- 28: Führungsschiene
- 29: Antriebszahnrad
- 30: Rundtisch
- 31: Einschleusstation
- 32: Füllstation
- 33: Schließstation
- 34: Übergabestation

- 40: Förderer

## Patentansprüche

1. Anlage zur Oberflächenbeschichtung von Kleinteilen mittels umlaufender, perforierter Trommeln sowie eines mit flüssigem Beschichtungsmittel gefüllten Tauchbades, in welches die mit Kleinteilen befüllbaren Trommeln eingetaucht werden, bestehend aus mehreren in Bearbeitungsrichtung hintereinander angeordneten Bearbeitungsstationen (11 bis 14), in welchen jeweils eine von mehreren Trommeln (1a bis 1m) taktweise mit einem Längsförderer (27) gebracht und mittels eines ankuppelbaren Antriebes in Drehbewegungund versetzt wird, wobei die erste Station (11) das Tauchbad (21) aufweist, in welches die Trommel (1e) mittels einer Hubvorrichtung bei langsamer Drehung absenkbar ist, die zweite Station (12) eine Abtropfwanne (22) zum Auffangen des bei langsamer Umdrehung der Trommel (1f) abtropfenden, überschüssigen Beschichtungsmittel aufweist, die dritte Station (13) nach Art einer Zentrifuge mit einem schnell laufenden Antrieb ausgebildet ist und die vierte Station (14) eine Vorrichtung zum Öffnen und Entleeren Trommel (1h) und eine Palette (24) zur Aufnahme der beschichteten Kleinteile aufweist,
**dadurch gekennzeichnet, dass** die Längsförderer (27) beidseitig der Anlage vorgesehene Hubbalken (25) aufweisen und transversal verschiebbar in Führungsschienen (28) gelagert sind und die Hubbalken im Abstand der Stationen (11 bis 14) nach oben offene Achsaufnahmen (26) aufweisen, in welche die Trommeln (1) mit ihren seitlich überstehenden Achsenden (4a, b) einhängbar sind.

2. Anlage nach Anspruch 1,
**dadurch gekennzeichnet, dass** zwischen der letzten Station (14) und der ersten Station (11) ein Förderer (40) zum Rücktransport der entleerten Trommeln (li, 1k, 1l) sowie eine Fülleinrichtung (30) zum Beladen der Trommeln (1a bis 1d) mit Kleinteilen vorgesehen ist.

3. Anlage nach Anspruch 2
**dadurch gekennzeichnet, dass** im Weg des Rücktransportförderers (40) eine Reinigungseinrichtung zur selbsttätigen Reinigung der entleerten und geöffneten Trommeln (1i bis 1l) vorgesehen ist.

4. Anlage nach Anspruch 3,
**dadurch gekennzeichnet , dass** die Reinigungseinrichtung Wasserspritzdüsen aufweist, mit welchen Wasser mit hohem Druck von vorzugsweise 1200 bar in die Trommeln gestrahlt wird.

5. Anlage nach Anspruch 3,
**dadurch gekennzeichnet, dass** die Reinigungsvorrichtung Ultraschallsender zur Erzeugung von die Reinigung der Trommeln bewirkendem Ultraschall aufweist.

6. Anlage nach einem der Ansprüche 2 bis 5,
**dadurch gekennzeichnet, dass** die Fülleinrichtung einen im Vorschubtakt umlaufenden Rundtisch (30) aufweist mit einer ersten Station (31) zum Einschleusen und Drehen der offenen Trommeln (la) in eine die Befüllung ermöglichende Position, mit einer zweiten Station (32) zum Befüllen der offenen Trommeln (1b), mit einer dritten Station (33) zum Schließen und Drehen der Trommeln (33) in einer Vorschub und Drehantrieb ermöglichende Position sowie mit einer vierten Station (34), aus welcher die Trommel (1d) lagegerecht in die erste Station (11) der Anlage (10) übergeben wird.

7. Anlage nach einem der Ansprüche 1 bis 6,
**dadurch gekennzeichnet, dass** die Trommeln (1) aus zwei spiegelsymmetrischen Halbschalen (2,3) bestehen, die auf einer Achse (4) axial verschiebbar aber drehfest angeordnet sind und welche mittels eines Schubmechanismus gegeneinander und von einander weg verschiebbar sind.

8. Anlage nach Anspruch 7,
**dadurch gekennzeichnet, dass** die Trommelschalen (2, 3) im Querschnitt vieleckig, vorzugsweise sechseckig, und im Diagonalschnitt trapezförmig sind, wobei die Trommelschalen (2, 3) mit ihren längeren Trapezseiten einander zugewandt sind.

9. Anlage nach einem der Ansprüche 1 bis 8,
**dadurch gekennzeichnet, dass** die Anlage bzw. der Rundtisch mehrere Stationen mit gleicher Funktion aufweist, die in Bearbeitungsrichtung hintereinander angeordnet sind.

## Claims

1. A plant for coating the surface of small parts by means of revolving perforated drums and an immersion bath which is filled with liquid coating agent and into which the drums capable of being filled with small parts are immersed, comprising a plurality of treatment stations (11 to 14) which are arranged one behind the other in the treatment direction and in which in each case one of a plurality of drums (1a to 1m) is moved in a clock-timed manner with a longitudinal conveyor (27) and is set in a rotating movement by means of a drive capable of being coupled, wherein the first station (11) has the immersion bath (21) in which the drum (1e) is capable of being lowered with slow rotation by means of a lifting device, the second station (12) has a drip tray (22) for catching the excess coating agent dripping off during the slow rotation of the drum (1f), the third station (13) is designed in the manner of a centrifuge with a rapidly running drive, and the fourth station (14) has an apparatus for opening and emptying [the] drum (1h) and a pallet (24) for receiving the coated small parts, **characterized in that** the longitudinal conveyors (27) have lifting beams (25) provided on both sides of the plant and are mounted in guide rails (28) so as to be transversely displaceable, and at a distance from the stations (11 to 14) the lifting beams have axle- retaining means (26) which are open at the top and in which the drums (1) are capable of being suspended with the axle ends (4a, b) thereof projecting at the side.

2. A plant according to claim 1, **characterized in that** a conveying means (40) for the return of the emptied drums (1i, 1k, 1l) and a filling device (30) for loading the drums (1a to 1d) with small parts is provided between the last station (14) and the first station (11).

3. A plant according to claim 2, **characterized in that** a cleaning device for the automatic cleaning of the emptied and opened drums (1i to 1l) is provided in the path of the return conveyor (40).

4. A plant according to claim 3, **characterized in that** the cleaning device has water spray nozzles by which water is directed at a high pressure of preferably 1200 bar into the drums.

5. A plant according to claim 3, **characterized in that** the cleaning device has ultrasonic transmitters for producing ultrasound which carries out the cleaning of the drums.

6. A plant according to any one of claims 2 to 5, **characterized in that** the filling device has a circular table (30) rotating in the feed section with a first station (31) for introducing and rotating the open drums (1a) into a position allowing the filling, with a second station (32) for filling the open drums (1b), with a third station (33) for closing and rotating the drums (33) in a position allowing a feed and a rotary drive, and with a fourth station (34) from which the drum (1d) is transferred in the correct position into the first station (11) of the plant (10).

7. A plant according to any one of claims 1 to 6, **characterized in that** the drums (1) comprise two mirror-symmetrical half-shells (2, 3) which are arranged on an axle (4) so as to be axially displaceable but rotationally fixed and which are displaceable towards each other and away from each other by means of a displacement mechanism.

8. A plant according to claim 7, **characterized in that** the drum shells (2, 3) are polygonal, preferably hexagonal, in cross-section and trapezoidal in diagonal section, wherein the drum shells (2, 3) face each other with their longer trapezium sides.

9. A plant according to claim 8, **characterized in that** the plant or the circular table has a plurality of stations with the same function, which are arranged one behind the other in the treatment direction.

## Revendications

1. Installation pour réaliser le revêtement de surface de petites pièces à l'aide de tambours perforés, tournants, ainsi que d'un bain d'immersion rempli d'un agent de revêtement liquide, dans lequel on immerge les tambours remplis de petites pièces, comprenant plusieurs postes de travail (11-14) les uns à la suite des autres dans la direction de travail, et dans lesquels chaque fois l'un des tambours (1a-1m) est placé de manière cadencée par un convoyeur longitudinal (27) et est mis en rotation par un moyen d'entraînement embrayable,
installation dans laquelle
le premier poste (11) comporte un bain d'immersion (21) dans lequel le tambour (1e) est enfoncé avec une rotation lente par un dispositif de levage,
le second poste (12) comportant une goulotte d'égouttage (22) pour recueillir l'agent de revêtement excédentaire qui goutte lorsque le tambour (1f) tourne lentement,
le troisième poste (13) étant réalisé comme une centrifugeuse avec un entraînement tournant rapidement, et
le quatrième poste (14) comporte un dispositif pour ouvrir et vider le tambour (1h) et une palette (24) pour recevoir les petites pièces munies du revêtement,
installation **caractérisée en ce que**
le convoyeur longitudinal (27) comporte de part et d'autre de l'installation, des poutres de levage (25) coulissant transversalement dans des rails de guidage (28), et
les poutres de levage comportent à distance des postes (11-14), des logements d'axe (26) ouverts vers le haut, dans lesquels s'accrochent les tambours (1) par les extrémités d'axe (4a, 4b) latéralement en saillie.

2. Installation selon la revendication 1,
**caractérisée par**
un convoyeur (40) entre le dernier poste (14) et le premier poste (11) pour retourner les tambours vides (1l, 1k, 1l), ainsi qu'une installation de remplissage (30) pour charger les tambours (1a-1d) avec les petites pièces.

3. Installation selon la revendication 2,
**caractérisée par**
une installation de nettoyage sur le trajet du convoyeur de retour (40) pour nettoyer automatiquement les tambours vides et ouverts (1i ... 1l).

4. Installation selon la revendication 3,
**caractérisée en ce que**
l'installation de nettoyage comporte des buses de pulvérisation d'eau, qui dirigent de l'eau à pression élevée de préférence à une pression de 1200 bars dans les tambours.

5. Installation selon la revendication 3,
**caractérisée en ce que**
l'installation de nettoyage comporte des émetteurs d'ultrasons pour générer des ultrasons servant à nettoyer le tambour.

6. Installation selon les revendications 2 à 5,
**caractérisée en ce que**
l'installation de remplissage comporte une table circulaire (30) tournant à la cadence d'avancement avec un premier poste (31) pour introduire et faire tourner les tambours ouverts (1a) dans une position permettant le remplissage, un second poste (32) pour remplir les tambours ouverts (1b), un troisième poste (33) pour fermer et faire tourner les tambours dans une position permettant l'avancée et l'entraînement en rotation, ainsi qu'un quatrième poste (34) à partir duquel, les tambours (1d) sont transférés en position correcte dans le premier poste (11) de l'installation (10).

7. Installation selon l'une des revendications 1 à 6,
**caractérisée en ce que**
les tambours (1) sont constitués par des demi-coquilles (2, 3) à symétrie plane, qui sont montées de manière coulissante axialement sur un axe (4), mais solidaires en rotation et qui peuvent être écartées l'une de l'autre par un mécanisme de poussée.

8. Installation selon la revendication 7,
**caractérisée en ce que**
les coquilles de tambours (2, 3) ont une section polygonale de préférence hexagonale et en coupe en diagonale, elles sont de forme trapézoïdale, les axes de tambours (2, 3) étant tournés l'un vers l'autre par leurs grandes côtés du trapèze.

9. Installation selon la revendication 8,
**caractérisée en ce que**
l'installation ou la table ronde comporte plusieurs postes assurant la même fonction et qui sont mis les uns derrière les autres dans la direction de travail.
